# EUROPEAN PATENT SPECIFICATION

(11) **EP 0 317 899 B1**
(45) Date of publication and mention of the grant of the patent: **20.01.1993**
(21) Application number: 88119154.8
(22) Date of filing: 17.11.1988
(51) Int. Cl.: A23G 3/00, A23P 1/08, A23L 1/06

(54) **Production of gelatin jelly confections**
Herstellung von Gelatinegelee-Konfekten
Production de confiseries de gelée de gélatine

(30) Priority: 25.11.1987 JP 296853/87; 29.12.1987 JP 333848/87
(43) Date of publication of application: 31.05.1989
(60) Divisional application: 91118355.6
(73) Proprietor: MEIJI SEIKA KAISHA LTD., Chuo-ku Tokyo 104 (JP)
(72) Inventor: Takahashi, Hiroyuki c/o Meiji Seika Kaisha, Ltd., Saiwai-ku Kawasaki-shi Kanagawa-ken (JP); Ooki, Takeo c/o Meiji Seika Kaisha, Ltd., Saiwai-ku Kawasaki-shi Kanagawa-ken (JP); Ishii, Kikujiro c/o Meiji Seika Kaisha, Ltd., Saiwai-ku Kawasaki-shi Kanagawa-ken (JP); Kanegae, Minoru c/o Meiji Seika Kaisha, Ltd., Saiwai-ku Kawasaki-shi Kanagawa-ken (JP); Sato, Toshio c/o Meiji Seika Kaisha, Ltd., Saiwai-ku Kawasaki-shi Kanagawa-ken (JP); Habuto, Akinaka c/o Meiji Seika Kaisha, Ltd., Saiwai-ku Kawasaki-shi Kanagawa-ken (JP); Murata, Tadahiko c/o Meiji Seika Kaisha, Ltd., Saiwai-ku Kawasaki-shi Kanagawa-ken (JP)
(74) Representative: Wächtershäuser, Günter, Prof. Dr.

(56) References cited:
- FR-A- 2 165 312
- PATENT ABSTRACTS OF JAPAN, vol. 12, no. 258(C-513)(3105), 20 July 1988; & JP-A-63 42659 (Q.P. Corp.) 23.02.1988
- PATENT ABSTRACTS OF JAPAN, vol. 5, no. 79(C-56)(751), 23 May 1981; & JP-A-56 26152 (Fuji Seiyu K.K.) 13.03.1981
- PATENT ABSTRACTS OF JAPAN, vol. 6, no. 139(C-116)(1017), 28 July 1982; & JP-A-57 65153 (Nippon Shinyaku K.K.) 20.04.1982

## Description

The present invention relates to a production of gelatin jelly confections, and more particularly to a process for the production of the gelatin jelly confection of an oil-in-water type emulsified jelly mass.

A jelly confection is one of popular cofections because of its unique texture. The gelatin jelly confection contains gelatin and sugar, as main ingredients and contains water of a range of 10 to 90% by weight. In general, the gelatin jelly confection has been prepared by adding gelatin, sugar and other ingredients into water, heating the same to dissolve the ingredients, depositing the resulting hot solution into stamped starch molds, colling the same to cause a solidification, drying the same, and then removing from the starch molds. Such a conventional gelatin jelly confection is hygroscopic and shows adhesiveness. In order to prevent sticking of pieces of the gelatin jelly confection with one another, each piece has been wrapped with a drum dried thin film of α-starch, or coated with a fatty or oily confectionary material such as chocolate, confectioner's coating, oily yoghurt or the like.

Even if a piece of the gelatin jelly confection is covered with sugar crystals moistured with steam or water, or coated with the fatty or oily confectionary material, moisture will permeate from inside thereof to soften or dissolve the coating, as the time lapses. Therfore, such a measure has been proposed that powder of drum dried thin film of α-starch is applied to the outer surface of the jelly confection, prior to the coating treatment [Jap. Pat. No. 48 - 68774 (A)].

Pieces of the jelly confection have been coated with the fatty or oily confectionary coating material not only for the purpose of preventing the pieces from sticking with one another but also for the purpose of providing a variety on the jelly confection by giving different tastes and/or textures. However, the coating requires one additional step therefor and further, there are possible fears that the coating is not suitably applied for or may be broken later, for instance on the way of transport to the market.

Therefore, the present inventors have energetically studied on a production of new type jelly confection, in which the fatty or oily confectinary coating material is composed, in lieu of coating therewith. As a result, it has been found that such new type jelly confection can be prepared by adding an emulsifier and setting water content thereof at a higher level. But, it is also found that an outer surface of the resulting jelly confection is sticky, a mouth feel of the same is too soft, and the product requires an expensive chilled transportation or distribution, in order to avoid its deterioration.

A jelly mass has, in general, stickiness which makes its handling for shaping and wrapping the same troublesome, but the following processes have been proposed as shaping and wrapping one having a relatively high efficiency.
a) A process, wherein a jelly cpnfection is pressed out by a pneumatic pressure from a molding opening at one end of a vessel storing the jelly mass, or with use of an extruder, the resulting molded elongating jelly confection is cut into pieces with a desired length, and then each piece is wrapped with a suitable wrapping material [Jap. Pat. No. 48 - 75766 (A)],
b) A process, wherein a given amount of jelly mass is deposited into a deformable mold, the jelly mass in the mold is chilled to cause solidification thereof, the mold is deformed to take out the solidified jelly piece on a drum dried thin film of α-starch, the jelly confection pieces are arranged to cause no contact with one another to dry the same, the drum dried thin film of α-starch is thereafter removed from each jelly confection piece, and then each dried jelly confection piece is wrapped again with a suitable wrapping material [Jap. Pat. No. 56 - 9292 (B)], and
c) A process, wherein a given amount of jelly mass is deposited into a bag of thermoplastic resin material or an interspace between a pair of thermoplastic resin films facing each other, and then a heat sealing is carried out at the open end of the bag or along the marginal portions of the films, so as to close then [Jap. Pat. No. 54 - 157869 (A)].

The process disclosed in said Jap. Pat. No. 48 - 75766 (A) does not permit simultaneous shaping and wrapping the jelly confection. The jelly mass of just after being extruded has no ability for maintaining its shape in definite. It means that separate molds or shaping vessels are required for an actual operation of the process. Therefore, the process has disadvantages that a plurality of molds or shaping vessels are necessary for a large scale production, large space is required for cooling the jelley confection in the molds or shaping vessels, a remarkable time consuming work is required for washing and drying the molds or shaping vessels after use.

The process disclosed in said Jap. Pat. No. 56 - 9292 (B) does also not permit simultaneous shaping and wrapping of the jelly confection. The process has disadvantages that a remarkable time consuming work is required, since the jelly confection once stuck to the drum dried thin film of α-starch is removed after drying and cutting operations, and then wrapped again, and there is a fear that the jelly confection pieces are contaminated with microbes, while being dried under non-protective condition.

Finally, the process disclosed in said Jap. Pat. No. 54 - 157869 (A) has a disadvantage that in case of using a bag of thermoplastic film, a troublesome operation is required for keeping the mouth of bag in open state while depositing a given amount of the jelly mass therein, or that in case of using the pair of films, a charging rate of the jelly mass is limited, since the heat sealing should be made prior to that a leading edge of the jelly mass flowing down in the interspace between the films reachs to an area to be sealed, which reduces a production efficiency.

An object of the invention is to provide a process for the production of a gelatin jelly confection, which does not show any adhesiveness on its outersurface and prevents pieces thereof from sticking one another, has good taste and mouth feel, and permits its dis tribution at an ambient or normal temperature.

According to the invention, the first object can be attained by a process for the production of a jelly confection, which comprises steps of mixing a gelatin containing aqueous solution with a fatty and/or confectionary material to prepare an oil-in-water type emulsion, wherein each content of the gelatin, water and a fat and/or oil due to the fatty and/or oily confectionary material is in a range of 2.5 to 5.5% by weight, 11 to 20% by weight and 18 to 34% by weight, respectively, based on the total weight of the emulsion, and then cooling the emulsion to cause a solidification thereof.

In case of carrying out the process for the production of the jelly confection, the gelatin is selected from those of various grades having a jelly strength and viscosity ranges of from 170 to 320 bloom and 30 to 40 milipoise, respectively, so that the resilience or mouth feel of the final jelly confection product can be changed in wide range from being like --Gyuhi-- (one of soft, resilient, semi-solid Japanese confection which is prepared by kneading steamed refined rice flour, refined sugar and corn syrup) to being like a rubber.

The gelatin containing aqueous solution to be used for the process according to the invention can be prepared by adding such a gelatin into water and heating to dissolve the same. The gelatin containing aqueous solution is not different from a conventional one, excepting that gelatin content therof is set at a lower level, and may contain a sugar and an emulsifier, as in the conventional one. As the sugar, sucrose, glucose, corn syrup, corn syrup solid or the like may be emploued alone or in combination, but sorbitol or the like sugar alcohol is not preferable, since it increase the viscosity of the mixture to cause bubbles, when the mixture will be emulsified later. There is no specific limitation on an amount of the sugar to be added, but it is preferable to set below 17% by weight based on the mixture, by taking a sugar amount in other ingredients and taste into consideration. When the emulsifier is added to the mixture, it is preferable to select that having HLB value of 8 or more, in view of formation of the oil-in-water type emulsion, and particularly sucrose fatty acid esters are preferably used. Please note that the emulsification is possible without adding any emulsifier, but the addition thereof facilitates the emulsification and stabilize the resulting emulsion. A desired effect by the emulsifier can be attained in the amount of 0.6% by weight or less based on the mixture.

The fatty or oily confectionary material may be selected from a group of chocolates (ordinary chocolate, white chocolate, colored chocolate and the like) having a fat content of about 26 - 50% and a sugar content of about 40 to 45%, a group of oily yoghurts having an oil content of about 26 to 50% and a sugar content of about 40 to 45%, and the like.

In the following, the invention will be explained in more detail, which shall refer to drawings, wherein
Fig. 1 is a graph showing a relation between gelatin content in an emulsion and tensile strength of a jelly confection to be prepared with use of the emulsion;
Fig. 2 is a graph showing a relation between water content in an emulsion and tensile strength of a jelly confection to be prepared with use of the emulsion;
Fig. 3 is a graph showing a relation between content of fat and/or oil due to a fatty and/or oily confectionary material in an emulsion and tensile strength of a jelly confection to be prepared with use of the emulsion;
An outline for carrying out the process of the invention will now be explained, together with meanings of various numeral limitations.

According to the process of the invention, in the first place, a gelatin containing aqueous solution and a fatty or oily confectionary material are mixed together to prepare an oil-in-water type emulsion. There are following two methods for preparing such an emulsion.

### a) A fatty or oil confectionary material dropping method :

Sugar is added in water, heating the solution at 60°C, and adding an emulsifier therein to dissolve the same. While, gelatin is added in water of a suitable amount to dissolve the same and heating the solution at 60°C to prepare a gelatin containing aqueous solution. The gelatin containing aqueous solution is added to said aqueous sugar solution to prepare a gelatin containing basic solution.

To the gelatin containing basic solution charged in a vertical planetary mixer, afatty or oily confectionary material heated at a temperature ranging from 50 to 55 °C is added dropwise, while stirring at 300rpm to prepare an oil-in-water type emulsion.

### b) A jelly material solution dropping - phase conversion method :

To a fatty or oily confectionary material heated at a temperature ranging from 50 to 55 °C and charged in a vertical planetary mixer, the gelatin containing basic solution as referred to in said Item a) and heated at 60°C is added dropwise, while stirring at 300 rpm to prepare firstly a water-in-oil type emulsion, and then prepare an oil-in-water type emulsion by further continuing the stirring for causing a phase conversion.

The resulting oil-in-water type emulsion in the mixer is fed to a hopper arranged above a pair of shaping rolls which are arranged in parallel with a given gap therebetween. A wrapping film strip is fed toward an upper surface of the shaping roll from each direction intersecting to a longitudinal one of the shaping rolls to pass downwardly the gap between the shaping rolls, so that the emulsion supplied from the hopper to the gap between the shaping rolls is sandwiched with the wrapping film strips and simultaneously shaped by the shaping rolls. The wrapped emulsion is then chilled, for instance by passing through a cooling tunnel to cause solidification thereof. The resulting jelly confection is cut into pieces with a desired size, and the pieces were packed to make into a product for sale.

One of features of the invention lies in setting a tensile strength of the resulting jelly food to a value of ranging from 30 to 90g. The tensile strength value is that measured by following testing method and has some connection with hardness and resilience and thus with mouth feel.

### Testing method for tensile strength:

A cut sample of gelatin jelly confection (5 x 680 x 1.3mm) is shaped in the form of ring by applying a rapid hardening adhesive for each shorter side end face of the sample and contacting each other. The resulting annular sample is set on two cylindrical adapters of a rheometer and then a distance of the adapters is made larger at a given constant velocity (0.5mm/min.), until the annular sample is broken. A stress, when the sample is broken, is measured to make the resulting value as the tensile strength of the sample.

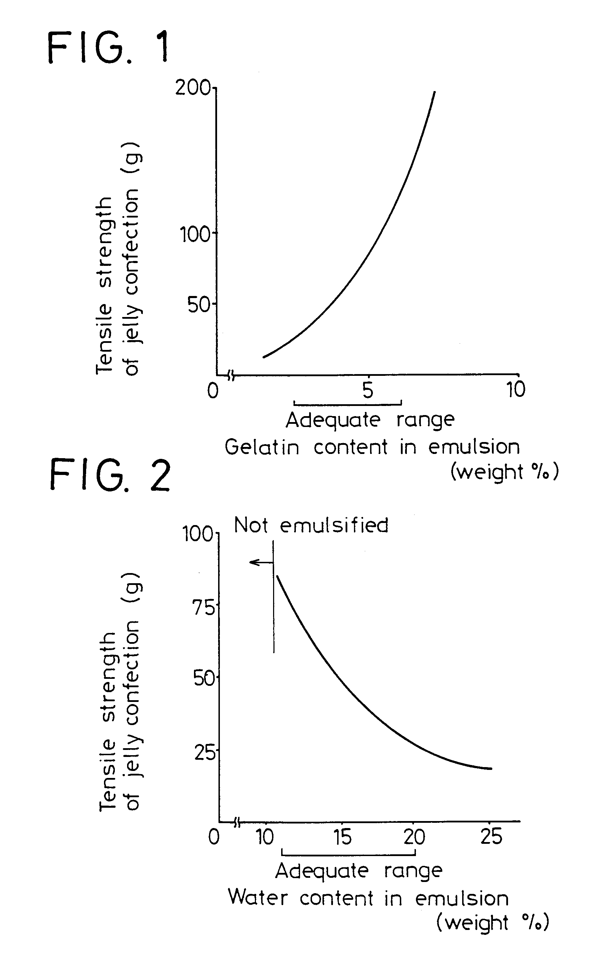

Various jelly confections were prepared as the manner as described before, under conditions of the gelatin content as variable factor and others are same in all cases. An annular sample was prepared with the use of each of the resulting jelly confections to check a relation between the content of gelatin and the tensile strength of the jelly confection. Results are shown in Fig. 1. As apparent from the Figure, followings have been found.
1) When the gelatin content is less than 2.5% by weight to 100 parts of the emulsion, the tensile strength does not reach 30g and such jelly confection is too soft in mouth feel to make difficult its handling during its production steps and a distribution thereof at a normal temperature,
2) While, the gelatin content is more than 5% by weight to 100 parts of the emulsion, the tensile strength exceeds 90g and such jelly confection is too hard and shows a rubber-like elasticity to cause a remarkable lovering in preference.

Therefore, in case of carrying out the process of the invention, the content of gelatin is set to a range of 2.5 to 5.5% by weight based on the emulsion, for the purpose of making mainly the tensile strength of the final jelly confection to 30 to 90g.

The tensile strength of jelly confection alters also by water content in the emulsion. Therefore, a relation between the water content of the emulsion and the tensile srength of jelly confection to be prepared with use of the emulsion was checked to obtain results as shown in Fig. 2. As seen from the Figure, it is found that for making the tensile strength in said value range of 30 to 90g, the water content of the emulsion should be set in a range of 11 to 20% by weight. It should be noted that no oil-in-water type emulsion can be prepared, when the water content of the emulsion is less than 11% by weight.

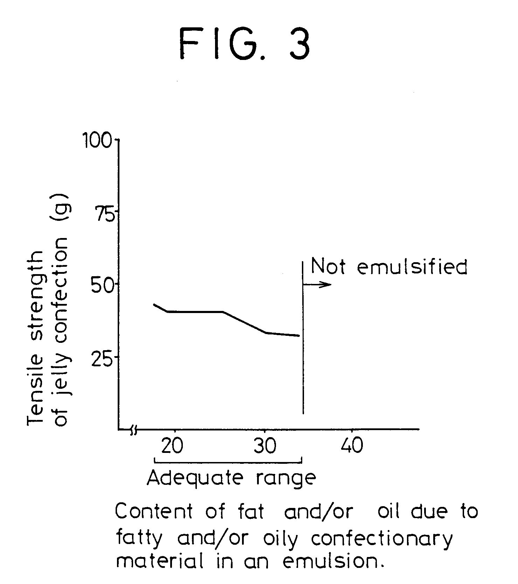

Further, the tensile strength of jelly confection depends on content of a fat or oil due to the fatty or oily confectionary material. Therefore, a relation between the fat or oil content of the emulsion and the tensile srength of jelly confection to be prepared with use of the emulsion was checked to obtain results as shown in Fig. 3. As from this Figure, it can be seen that the tensile strength tends to increase, as the content of fat or oil due to the fatty or oily confectionary material decreases, that in case of less than 18% by weight in the fat or oil content, a preference is lowered. due to a reduction of the taste inherent to the fatty or oily confectionary material, and that in case of more than 34% by weight in the fat or oil content, the desired non-sticky jelly confection can not be prepared, since the emulsion will become not to oil-in-water type but water-in-oil type one.

A guide on amount of sugar and emulsifier for preparing the gelatin containing basic solution, will be given as follows, although those are not indispensable ingredients. A jelly confection will become too sweet to lower taste thereof and the the separation of the same from the wrapping film become difficult, when content thereof is higher than upper value of 17% by weight based on the emulsion. When the emilsifier is employed and more particularly exemplary sugar fatty acid ester is selected, an amount thereof should be set less than 6% by weight based on the emulsion, since an excess addition increases a viscosity of the gelatin containing basic solution to reduce a workablity.

### Example 1

Gelatin (3.2% by weight --This and following values are based on the total weight of an emulsion to be prepared later--) was added to and dissolved in hot water in a vessel regulated by a thermostat at 60°C to prepare a gelatin containing solution. While, an aqueous glucose solution (19.7% by weight) regulated its density in Brix scale to 65.5 and sucrose fatty acid ester (0.1% by weight) of HLB 15 were mixed homogenously and temperature of the mixture was regulated at 60 °C. The both solutions were mixed to prepare a geratin containing basic solution.

The geratin containing basic solution was charged in a vertical planetary mixer kept at 55°C. A chocolate material (67.9% by weight, fat content : 35% by weight, sugar content : 46% by weight) heated to 50°C was added dropwise to the gelatin containing basic solution in the mixer, while agitating the geratin containing basic solution. After completion of the dropping, the mixer was rotated for 1 to 2 minutes at 300rpm.

The resulting oil-in-water type emulsion was charged in a hopper arranged above two smooth shaping rolls arranged in parallel each other. Each of two wrapping film strips was continuously supplied to the shaping roll so as to downwardly pass the gap between the shaping rolls, whereby the emulsion charged in the hopper and flowing down in the gap between the shaping rolls was sandwiched with the wrapping film strips and simultaneously rolled by the shaping rolls. The wrapped and shaped emulsion was forcedly cooled in a cooling tunnel to cause solidification thereof and finally cut into pieces with a desired size.

Followings are particulars of the resulting jelly confection.

| | |
|---|---|
| Gelatin content | 3.2% by weight |
| Fat content | 27.2% by weight |
| Water content | 16.9% by weight |
| Tensile strength | 40g |

The jelly confection had a good chocolate flavor, as well as a suitable stiffness and resilience.

### Example 2

A jelly confection was prepared in the manner as in Example 1, except that an oil-in-water type emulsion was prepared with use of gelatin (4.5% by weight), water (9.1% by weight), an aqeous glucose solution (19.7% by weight) regulated its density in Brix scale to 65.5, sucrose fatty acid ester (0.1% by weight) of HLB 15, and a yoghurt mass (oil content : 40.5% by weight, sugar content : 40.5% by weight).

The yoghurt mass was prepared by mixing in a verticxal planetary mixer sucrose (25.5% by weight), lactose (15% by weight), defatted milk powder (9.0% by weight), fermented milk butter (10.0% by weight), cacao butter (5.0% by weight), a vegitable oil (11.0% by weight), and soy bean lecithin (0.15% by weight), rolling the resulting mixture to make it into flake, and then further mixing the flake with a vegitable oil (24% by weight) and soy bean lecithin (0.35% by weight) with use of the vertical planetary mixer.

Followings are particulars of the jelly confection obtained by this Example.

| | |
|---|---|
| Fat content | 28.6% by weight |
| Water content | 15.9% by weight |
| Tensile strength | 70 g |

The jelly confection had a good yoghurt flavor, a suitable stiffness and somewhat high resilience.

## Claims

1. A process for the production of a gelatin jelly confection, which comprises steps of mixing an gelatin containing aqueous solution with a fatty and/or oily confectionary material to prepare an oil-in-water type emulsion, wherein each content of the gelatin, water and a fat and/or oil due to the fatty and/or oily confectionary material is 2.5 to 5.5% by weight, 11 to 20% by weight and 18 to 34% by weight, respectively, based on the total weight of the emulsion, and then cooling the emulsion to cause a solidification thereof.

2. A process as claimed in Claim 1, wherein said emulsion is prepared by adding the fatty and/or oily confectionary material dropwise to the gelatin containing aqueous solution and stirring the resulting mixture confectionary material, until the oil-in-water type emulsion is formed.

3. A process as claimed in Claim 1, wherein said emulsion is prepared by adding the gelatin containing aqueous solution dropwise to the fatty and/or oily confectionary material and stirring the resulting mixture, until the oil-in-water type emulsion is formed through an water-in-oil type emulsion.

## Patentansprüche

1. Verfahren zur Herstellung von Gelatinegelee-Konfekten, umfassend die Verfahrensstufen des Vermischens einer gelatinehaltigen wässrigen Lösung mit einem fettigen und/oder öligen Konfektmaterial zur Herstellung einer Emulsion vom Öl-in-Wasser-Typ, wobei jeweils der Gehalt an Gelatine, Wasser und einem Fett und/oder Öl, das von dem fettigen und/oder öligen Konfektmaterial stammt, 2,5 bis 5,5 Gew.%, 11 bis 20 Gew.% bzw. 18 bis 34 Gew.%, bezogen auf das Gesamtgewicht der Emulsion, beträgt und wobei man anschließend die Emulsion abkühlt, um ein Festwerden derselben zu verursachen.

2. Verfahren gemäß Anspruch 1, wobei die Emulsion hergestellt wird, indem man das fettige und/oder ölige Konfektmaterial tropfenweise zu der gelatinehaltigen wässrigen Lösung gibt und die resultierende Konfektmaterialmischung rührt, bis sich die Emulsion vom Öl-in-Wasser-Typ bildet.

3. Verfahren gemäß Anspruch 1, wobei die Emulsion hergestellt wird, indem man die gelatinehaltige wässrige Lösung tropfenweise zu dem fettigen und/oder öligen Konfektmaterial gibt und die resultierende Mischung rührt, bis sich über eine Emulsion vom Wasser-in-Öl-Typ die Emulsion vom Öl-in-Wasser-Typ bildet.

## Revendications

1. Procédé pour la production d'une confiserie à base de gelée de gélatine, comprenant des étapes de mélange d'une solution aqueuse contenant de la gélatine avec un produit de confiserie gras et/ou huileux, pour préparer une émulsion du type huile dans l'eau, dans laquelle les teneurs en gélatine, eau et matière grasse et/ou huile provenant du produit de confiserie gras et/ou huileux sont respectivement de 2,5 à 5,5 % en poids, 11 à 20 % en poids, et 18 à 34 % en poids, sur la base du poids total de l'émulsion, et ensuite de refroidissement de l'émulsion afin de provoquer une solidification de celle-ci.

2. Procédé selon la revendication 1, dans lequel ladite émulsion est préparée en ajoutant le produit de confiserie gras et/ou huileux, goutte à goutte, à la solution aqueuse contenant de la gélatine, et en agitant le produit de confiserie en mélange résultant jusqu'à ce que l'émulsion du type huile dans l'eau soit formée.

3. Procédé selon la revendication 1, dans lequel ladite émulsion est préparée en ajoutant la solution aqueuse contenant de la gélatine, goutte à goutte, au produit de confiserie gras et/ou huileux, et en agitant le mélange résultant jusqu'à ce que l'émulsion du type huile dans l'eau soit formée en passant par une émulsion du type eau dans l'huile.
